# EUROPÄISCHE PATENTANMELDUNG

(11) **EP 1 017 144 A1**
(43) Veröffentlichungstag der Anmeldung: **05.07.2000**
(21) Anmeldenummer: 99125423.6
(22) Anmeldetag: 20.12.1999
(51) Int. Cl.: H02G 7/10, H01B 11/00, G02B 6/48

(54) **Optische Übertragungselemente enthaltendes Luftkabel**

(30) Priorität: 29.12.1998 DE 19860693
(71) Anmelder: SIEMENS AKTIENGESELLSCHAFT, 80333 München (DE)
(72) Erfinder: Mayr, Ernst, 82319 Starnberg (DE); Müller, Thomas, 96515 Sonneberg (DE); Heinz, Edgar, 96523 Steinach (DE)

(57) **Zusammenfassung**

ADL-Luftkabel werden üblicherweise mittels eines Laschbandes an einem Erd- oder Phasenseil einer Freileitung befestigt, wobei der Verbund aus Kabel und Trägerseil auch unter extremen Witterungsbedingungen über Jahre erhalten bleiben soll.

Das Luftkabel besteht im wesentlichen aus einem eine Vielzahl von LWL-Fasern (2) aufnehmenden Zentralrohr (4), zugfesten Verstärkungselementen (14) und einem Kunststoffmantel (6), der eine sich in Richtung der Längsachse des Zentralrohrs (4) erstreckende, dem Querschnitt des Trägerseils angepaßte Vertiefung (8) aufweist. Zwei die Vertiefung (8) seitlich begrenzende, wulstartige Verdickungen (10) vergrößern die als Auflage für das Trägerseil dienende und mit einer Klebeschicht versehene Mantelfläche (12).

## Beschreibung

Die vorliegende Erfindung bezieht sich insbesondere auf ein Lichtwellenleiter-Luftkabel (LWL-Luftkabel) zur Befestigung an einem Erd- oder Phasenseil einer Nieder-, Mittel- oder Hochspannungsfreileitung.

Durch die Verlegung von LWL-Luftkabeln in ihren Mittel- und Hochspannungstrassen, gelang es überregionalen Energieversorgern, nahezu alle größeren Städte und Gemeinden unter Umgehung der Netze nationaler Telekommunikationsgesellschaften nachrichtentechnisch miteinander zu verbinden. Zum Einsatz kommen hierbei insbesondere selbsttragende, d.h. eigenständig abspannbare Luftkabel und sogenannte ADL-Kabel (All-Dielectric-Lash). Während selbsttragende Luftkabel mit metallfreien, konzentrisch bezüglich der Kabellängsachse angeordneten Zugentlastungselementen (All-Dielectric-Self-Supporting- bzw. ADSS-Kabel) oder mit einem die Zugkräfte aufnehmenden Stahl-Trägerseil (Figur-8-Kabel) ausgestattet sind, besitzen ADL-Kabel keine eigenen Tragelemente. Sie werden üblicherweise mittels eines Halte- oder Laschbandes an einem bereits montierten Erd- oder Phasenseil der Freileitung befestigt. Als optisches Übertragungselement dient beispielsweise eine zentral im Luftkabel angeordnete LWL-Bündelader. Da die LWL-Fasern, LWL-Faserbündel oder LWL-Bändchen mit definierter Überlänge in der Aderhülle liegen, werden sie selbst unter extremen Bedingungen (Sturm, Eislast, Temperaturschwankungen, usw.) nicht mechanisch belastet.

Die WO 96/38892 beschreibt ein Laschband, das im wesentlichen aus einer kleberbeschichteten und durch Glas- oder Aramidfasern verstärkten Kunststoffolie besteht. Eine auf der kabelseitigen Fläche mittig angeordnete, die Klebefläche zu maximal 70 % abdeckende Aramidgarnschicht dient der Erhöhung der Reißfestigkeit. Trotz der guten Klebe- und Haftungseigenschaften des bekannten Laschbandes, mußte man in der Praxis immer wieder feststellen, daß sich das montierte LWL-Luftkabel an einigen Stellen ablöste, in Schlaufen am jeweiligen Tragseil hing und so die Gefahr der Beschädigung durch starke Winde, Böen oder Eislasten bestand.

Ziel der Erfindung ist die Schaffung eines optische Übertragungselemente, insbesondere LWL-Fasern, LWL-Bändchen oder LWL-Adern enthaltenden Luftkabels, das sich in einfacher Weise mittels eines Halte- oder Laschbandes an einem Trägerseil oder einem anderen langgestreckten/strangförmigen Element dauerhaft befestigen läßt. Diese Aufgabe wird durch ein Luftkabel mit den in Patentanspruch 1 angegebenen Merkmalen gelöst. Die abhängigen Ansprüche betreffen vorteilhafte Weiterbildungen und Ausgestaltungen des Luftkabels.

Da das Profil des Kabelmantels der Form des Tragseils angepaßt ist, schmiegt sich das Luftkabel eng an das Trägerseil an, so daß eine äußerst kompakte, durch das Laschband zusammengehaltene Einheit entsteht. Der Zusammenhalt dieser aus dem Luftkabel und dem Trägerseil bestehenden Einheit läßt sich weiter verbessern, indem man die als Auflagefläche für das Trägerseil dienenden Mantelbereiche des Luftkabels aufrauht oder mit einer Struktur versieht und sie anschließend mit einem Kleber (Schmelzkleber, Haftkleber) oder einer adhäsiv wirkenden Substanz (z.B. PUR-Schaum) beschichtet. Diese Maßnahme gewährleistet, daß sich das Luftkabel auch nach einer Beschädigung des Laschbandes nicht vom Halteseil löst und durchhängt.

Um die auf die optischen Übertragungselemente wirkenden Kräfte zu minimieren, kann man das Luftkabel zusätzlich noch mit Verstärkungselementen (Zug- und/oder Stützelemente) ausstatten. Diese strang- oder stabförmigen, sich in Richtung der Kabellängsachse erstreckenden und in den Kabelmantel eingebetteten Verstärkungselemente bestehen vorzugsweise aus einem glasfaser- oder kohlefaserverstärkten Kunststoff.

Die Erfindung wird im Folgenden anhand der Zeichnungen erläutert. Es zeigen:
- Fig. 1: den schematischen Aufbau eines Luftkabels;
- Fig. 2: das in Fig. 1 dargestellte und mittels eines Laschbandes an einem Trägerseil befestigte Luftkabel;
- Fig. 3: ein zweites Ausführungsbeispiel eines Luftkabels und
- Fig. 4: das in Fig. 3 dargestellte und mittels eines Laschbandes an einem Trägerseil befestigte Luftkabel.

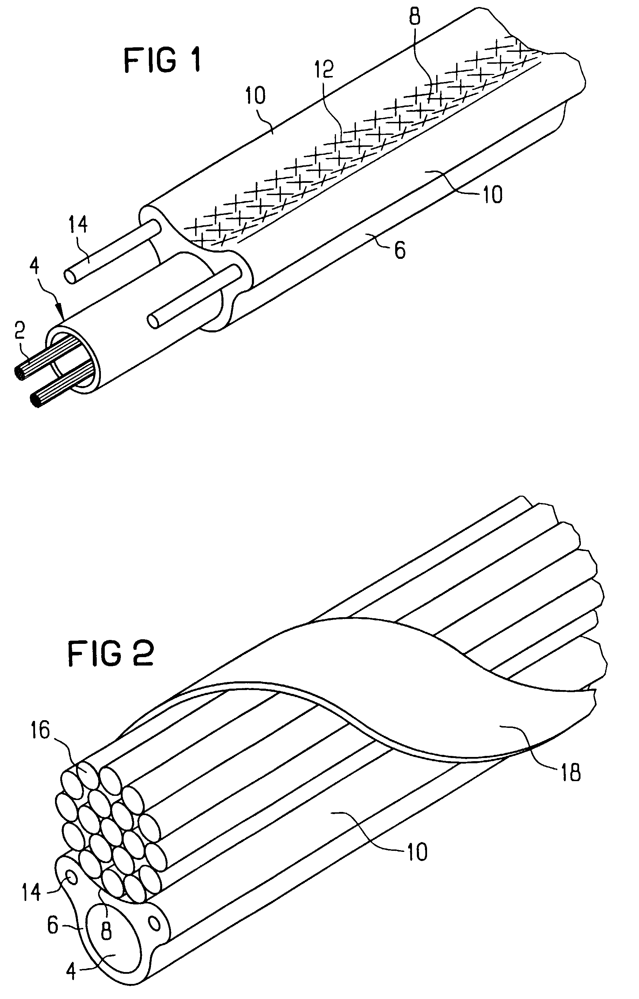

Das in Figur 1 schematisch dargestellte Luftkabel 1 besteht im wesentlichen aus einem beispielsweise N = 12 oder N = 14 LWL-Fasern 2 oder mehrere LWL-Bändchen aufnehmenden Zentralrohr 4, einem das Zentralrohr 4 umhüllenden Mantel 6 und den beiden in das Mantelmaterial eingebetteten, die Zugkräfte aufnehmenden Verstärkungselementen 14. Der Außendurchmesser des auch als "Bündelader" oder "Maxibündel" bezeichneten und aus einem schrumpfarmen Kunststoff (beispielsweise Polycarbonat PC oder Polyamid PA) gefertigten Zentralrohrs 4 beträgt typischer Weise etwa 4 - 8 mm. Zum Schutz der ggf. gebündelten/verdrillten und mit Überlänge im Zentralrohr 4 angeordneten LWL-Fasern 2 kann das Zentralrohr 4 noch mit einer thixotropen Masse (nicht dargestellt) gefüllt sein. Der vorteilhafter Weise mit dem Zentralrohr 4 verklebte und beispielsweise aus Polyethylen (PE) oder Polypropylen (PP) bestehende Mantel 6 weist eine sich in Richtung der Längsachse des Zentralrohrs 4 erstreckende, dem üblicherweise zylindrischen Querschnitt des Trägerseils (Erd- oder Phasenseil) angepaßte Vertiefung 8 auf. Zwei die Vertiefung 8 seitlich begrenzende, wulstartige Verdickungen 10 des Mantels 6 überhöhen den Rand der Vertiefung 8 und vergrößern damit die als Seilauflage dienende Mantelfläche. Als Material für die im Bereich der wulstartigen Verdickungen 10 des Mantels 6 eingebrachten, parallel zur Längsachse des Zentralrohrs 4 verlaufenden Verstärkungselemente 14 kommen insbesondere glasfaser- oder kohlefaserverstärkte Kunststoffe, Polycarbonate und sog. LCP's (Liquid Crystal Polymers) in Betracht. Innerhalb der Vertiefung 8 ist der Kabelmantel 6 gerändelt, gerillt oder aufgerauht und vorzugsweise mit einem Schmelz- oder Haftkleber beschichtet. Besonders bewährt haben sich Polyamid-Schmelzkleber oder Epoxidkleber. Der Schmelzkleber wird schon während der Herstellung des Mantels 6 aufgetragen, der Epoxidkleber hingegen erst unmittelbar vor dem Anlaschen des Luftkabels am Trägerseil durch vermischen zweier Komponenten hergestellt und ggf. zusammen mit einem Haftvermittler aufgebracht.

Wie die Figur 2 zeigt, bilden das Luftkabel 1 und das beispielsweise aus verseilten Stahldrähten bestehende Trägerseil 16 eine äußerst kompakte, durch das Umwickeln mit dem Laschband 18 gesicherte/fixierte Einheit, deren Querschnitt den des Tragseils 16 nur unwesentlich übertrifft. Die Profilierung des Kabelmantels 6 ermöglicht eine aerodynamisch günstige Konstruktion, die dem Wind nur wenig Angriffsfläche bietet. Auf das Luftkabel 1 und die LWL-Fasern wirken daher nur schwache, durch den Wind hervorgerufene Querkräfte.

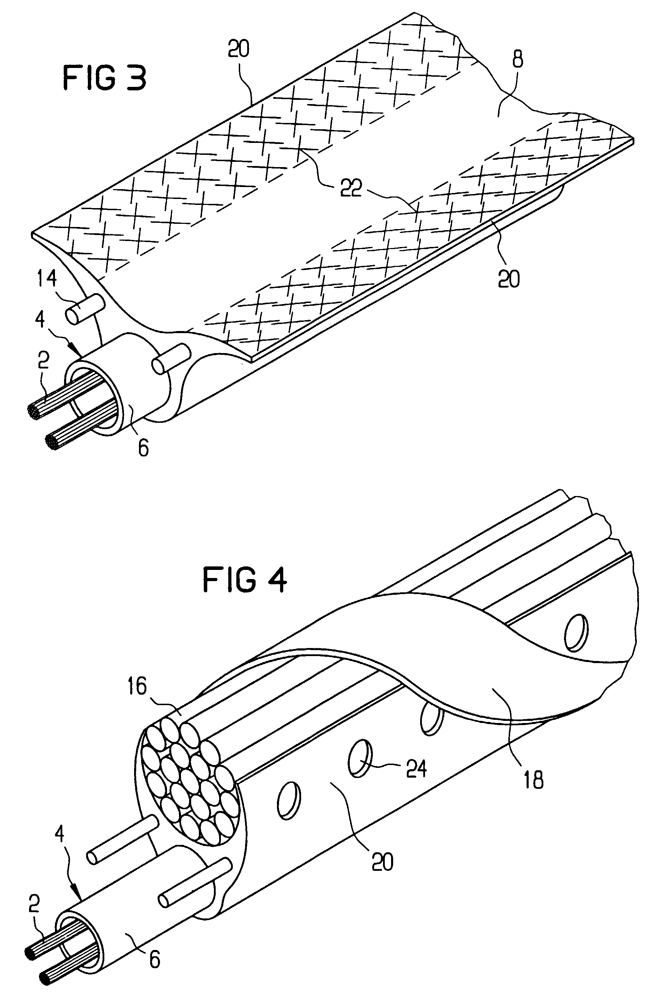

Das in den Figuren 3 und 4 dargestellte Luftkabel 1 weist ebenfalls ein die LWL-Fasern 2 oder LWL-Bändchen schützendes und ggf. mit einer thixotropen Masse gefülltes Zentralrohr 4 ("Bündelader"), einen PE- oder PF-Mantel 6, zwei in das Mantelmaterial eingebettete, parallel zur Längsachse des Zentralrohrs 4 ausgerichtete Verstärkungselemente 14 sowie ein sich über die gesamte Länge des Luftkabels 1 erstreckende, dem Querschnitt des Tragseils 16 angepaßte Vertiefung 8 auf. Letztere geht beidseitig jeweils in ein sich nach außen hin verjüngendes, flügelartiges Element 20 des Mantels 6 über. Die dem Trägerseil 16 zugewandten Flächen der Flügelelemente 20 sind ebenso wie die Innenfläche der Vertiefung 8 mit einer Struktur 22 versehen (gerillt, gerändelt) oder aufgerauht. Ein diese Mantelflächen bedeckende Klebeschicht sorgt für eine gute Haftung des Luftkabels 1 an dem in der Vertiefung 8 aufliegenden Trägerseil 16. Mit Hilfe des Laschbandes 18 werden die beiden Flügelelemente 20 mit dem Trägerseil 16 in Kontakt gebracht, dadurch zylindrisch verformt und in dieser Lage fixiert. Die in den Flügelelementen 20 vorhandene, nur in Figur 4 dargestellte Perforation 24 gewährleistet, daß sich kein Regen- oder Kondenswasser in der Vertiefung 8 ansammeln kann.

Die Erfindung beschränkt sich selbstverständlich nicht auf die oben beschriebenen Ausführungsbeispiele. So ist es ohne weiteres möglich,
- die zugfesten und insbesondere auch stauchfesten Verstärkungselemente 14 bandförmig auszubilden und sie symmetrisch oder paarweise symmetrisch bezüglich der Kabellängsachse zwischen dem Zentralrohr 4 ("Innenmantel") und dem Mantel 6 ("Außenmantel") anzuordnen;
- das Zentralrohr 4 geschichtet aufzubauen;
- die als Kabelauflage dienenden Mantelflächen mit einer klebrigen oder adhäsiv wirkenden Substanz (beispielsweise Polyurethan PUR) zu beschichten oder mit einer am Trägerseil 16 anvulkanisierenden Kunststoffmischung (Kautschuk, Silikonkautschuk) zu versehen;
- das Luftkabel 1 durch zwei im Kreuz- oder Gegenschlag auf gebrachte Klebe- oder Laschbänder zu befestigen,
- die optischen Übertragungselemente erst nachträglich, d.h. beispielsweise mittels Druckluft in die leere Hohlader einzublasen oder in bekannter Weise einzuziehen.
- das Luftkabel an einem langgestreckten/strangförmigen Trägerelement (Voll- oder Hohlrohr usw.) zu befestigen.

## Patentansprüche

1. Luftkabel, zur Befestigung an einem langgstreckten oder strangförmigen Trägerelement (16), wobei das Luftkabel (1) mehrere, in einem Zentralrohr (4) angeordnete oder nachträglich in das Zentralrohr (4) eingebrachte optische Übertragungselemente (2) und einen das Zentralrohr (4) umhüllenden Mantel (6) aufweist
**dadurch gekennzeichnet,**
daß der Mantel (6) ein der Form des Trägerelements (16) angepaßtes Profil besitzt.

2. Luftkabel nach Anspruch 1,
**dadurch gekennzeichnet,**
daß der Mantel (6) eine sich in Richtung der Längsachse des Zentralrohrs (4) erstreckende und dem Querschnitt des Trägerelements (16) angepaßte Vertiefung (8) besitzt.

3. Luftkabel nach Anspruch 2,
**dadurch gekennzeichnet,**
daß die Vertiefung (8) in einem dem Trägerelement (16) zugewandten, verstärkten Bereich des Mantels (6) angeordnet ist.

4. Luftkabel nach Anspruch 3,
**dadurch gekennzeichnet,**
daß zwei wulstartige Verdickungen (10) des Mantels (6) die Vertiefung (8) seitlich begrenzen.

5. Luftkabel nach Anspruch 3,
**dadurch gekennzeichnet,**
daß die Vertiefung (8) beidseitig jeweils in ein flügelartiges Element (20) des Mantels (6) übergeht.

6. Luftkabel nach einem der Ansprüche 1 bis 5,
**dadurch gekennzeichnet,**
daß die dem Trägerelement (16) zugewandte Fläche der Vertiefungen (8) und/oder die dem Trägerelement (16) zugewandte Fläche der flügelartigen Elemente (20) strukturiert oder aufgerauht und mit einem Kleber oder einer adhäsiv wirkenden Substanz beschichtet sind.

7. Luftkabel nach einem der Ansprüche 1 bis 5,
**gekennzeichnet durch** mehrere, sich in Richtung der Längsachse des Zentralrohrs (4) erstreckende Verstärkungselemente (14).

8. Luftkabel nach Anspruch 7,
**dadurch gekennzeichnet,**
daß die Verstärkungselemente (14) im Bereich der wulstartigen Verdickungen (10) oder im zentralrohrseitigen Bereich der flügelartigen Elemente (20) angeordnet sind.

9. Luftkabel nach einem der Ansprüche 5 bis 8,
**dadurch gekennzeichnet,**
daß die flügelartigen Elemente (20) mit einer Perforation (24) versehen sind.
